# EUROPEAN PATENT SPECIFICATION

(11) **EP 0 570 104 B1**
(45) Date of publication and mention of the grant of the patent: **12.03.1997**
(21) Application number: 93302655.1
(22) Date of filing: 05.04.1993
(51) Int. Cl.: B65G 9/00, B65G 47/90

(54) **Clip device**
Klammer
Pince

(30) Priority: 12.05.1992 JP 146641/92
(43) Date of publication of application: 18.11.1993
(73) Proprietor: TOUHAKU CO. LTD., Touhaku-gun, Tottori-ken (JP)
(72) Inventor: Kawasaka, Shozo, Osaka-shi, Osak-fu (JP)
(74) Representative: Carpenter, David

(56) References cited:
- WO-A-89/01891
- CH-A- 562 743
- DE-A- 2 940 266
- DE-C- 3 821 214

## Description

This invention relates to a clip device for holding a part of an article of dress on a movable holder unit of a track conveyor system.

A conventional clip used for holding a part of an article of dress normally comprises a pair of oblong pieces fastened together by a spring and urged to pinch an article therebetween like a clothespin with one of its end secured to a holder unit so that the part may be conveyed along the track of the conveyor system. A clip of this type is disclosed in DE 2940266.

Since the operation of such a clip relies solely on the resilient force of a spring, the part held by the clip can drop from it onto the floor against the resilient force of the spring if the part is relatively heavy or thick or the holder unit is subjected to a shock or vibration while it is being moved.

In view of the above described drawbacks and other drawbacks of a conventional clip, it is therefore an object of the present invention to provide a clip device that can safely hold a part of an article of dress without dropping it if the part is relatively heavy or thick or the holding unit comprising said clip is subjected to a shock or vibration while it is being moved.

According to the present invention there is provided a clip device for holding a part of an article of dress comprising an elongate support plate provided with ribs formed by bending opposite longitudinal edge regions thereof to extend transverse to the plane of the support plate, an elongate press plate provided with ribs formed by bending opposite longitudinal edge regions thereof to extend transverse to the plane of said press plate, a transverse shaft extending through said ribs of said support and press plates to pivotally mount the press plate to the support plate, and characterized by a cushion made of sponge or a similar material bonded to a flat area of the support plate near a front end thereof, an opening in the support plate near the rear end thereof, the press plate having a width smaller than that of the opening of the support plate and extending therethrough, a cushion bonded to a flat area of the press plate presented in use to the cushion of the support plate, said opening being dimensioned to permit said press plate to pivot about the axis of said shaft to move the cushion of the press plate towards and away from the cushion of the support plate and said press plate being equipped with an abutment member formed by bending a rear end region of the press plate out of the plane thereof and said support plate being equipped with a plate spring disposed near the rear end thereof for engagement by said abutment of the press plate.

Such a clip device is different from a conventional clip that utilizes the resilient force of a spring comprised in the clip to pinch and hold an object in that the press plate of the clip device is not urged toward the support plate to close the clip but maintained to a closed position by a particular arrangement of related components of the clip device.

When the clip device is not in use, the press plate of the clip device is freely swingable relative to the support plate because it is not urged toward the support plate. Once a part of an article of dress is placed between the support plate and the press plate and the press plate is pressed against the support plate to hold the part therebetween, the stopper of the press plate and the plate spring bonded to the support plate abut each other and, as the press plate is pressed further toward the support plate, the bent and projecting section of the stopper goes beyond the bent section of the plate spring and comes to be engaged with the latter so that the press plate is locked to the support plate.

The cushions fitted to the respected front end portions of the support plate and the press plate operate as a shock absorber to absorb and dissipate any excessive force that may be applied to the clip device, while firmly holding a part df an article of dress between them. If the clip device is moved while holding a part, the latter would not be released from the clip device until significantly force is applied thereto because the clip device is kept in a locked condition.

The clip device can be unlocked by simply pressing down the press plate to urge the press plate away from the support plate whereby a stopper provided at the rear end of the press plate is released from the plate spring and permits the press plate to swing freely.

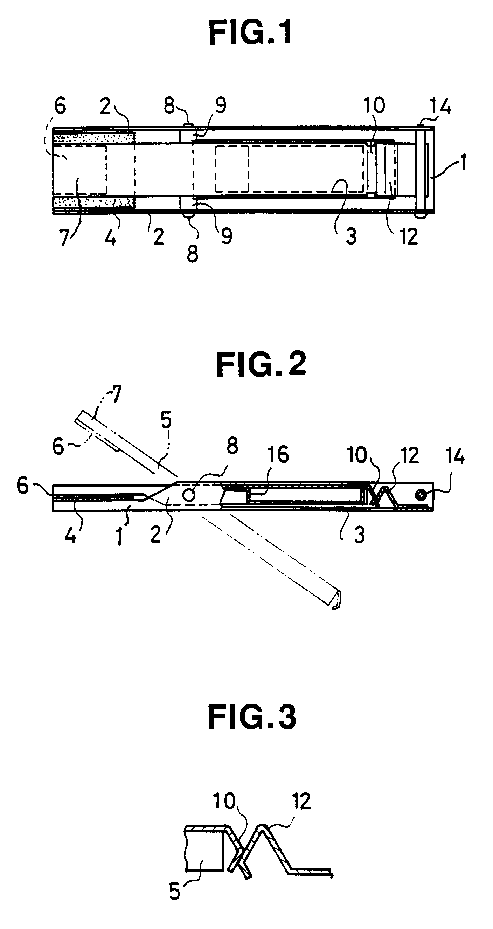

Figure 1 is a plan view of a preferred embodiment of clip device of the invention, showing it partly in cross section;
Figure 2 is a lateral view of the embodiment of Figure 1, showing it partly in cross section;
Figure 3 is a partial lateral view of the embodiment of Figure 1, showing the engagement of related components thereof; and

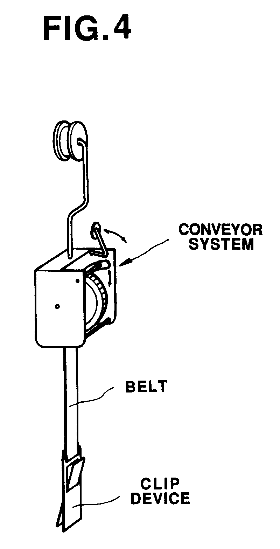

Figure 4 is a schematic perspective view of a movable holder unit of a conveyor system incorporating the embodiment.

Now, the present invention will be described in greater detail by referring to the accompanying drawings that illustrate a preferred embodiment of the invention.

In drawings, reference numeral 1 denotes a support plate provided with a pair of reinforcement ribs 2, 2 formed by rectangularly bending the respective longitudinal edges of the support plate, an opening 3 of a given size cut through the plate and a cushion 4 made of sponge or a similar material and bonded to a front portion of the support plate. Reference numeral 7 denotes a press plate having a width smaller than that of the opening of the support plate 1 and provided with a pair of reinforcement ribs 5, 5 formed by rectangularly bending the respective longitudinal edges of the press plate and a cushion 6 made of sponge or a similar material and bonded to a front portion of the press plate. The ribs 4, 4 of the support plate 1 and the ribs 6, 6 of the press plate 7 are cut at the areas close to the respective cushions 4, 6 to a height less than that of the cushions. The opening 3 of the support plate 1 is wide enough to allow the press plate 7 to swing therethrough and has a length greater than the distance between the front end of the press plate 7 and a shaft that rotatably holds the press plate 7 to the support plate 1.

The press plate 7 is swingably fitted to the support plate 1 by a shaft 8 running through the reinforcement ribs 2, 2 of the support plate 1 and the reinforcement ribs 5, 5 of the press plate 7 in such a manner that the cushions 4, 6 abut each other when the plates 1 and 7 are closed. Note that spacers 9, 9 are disposed at the respective longitudinal sides of the plates 1 and 7 to fill the gaps between the reinforcement ribs 2, 2 and the corresponding respective reinforcement rib 5, 5 produced there because of the difference of the widths of the plates 1, and 7.

The longitudinal end of the press plate 7 opposite to the cushion side end is bent so that it projects outward to form an abutment or stopper 10. On the other hand, a plate spring 12 formed by bending part of a flat plate to show an upward projection (inverted V) is bonded to the flat surface of the support plate 1 by welding or the like near the end of the support plate 1 opposite to the cushion 4 such that the front end of the plate spring 12 abuts and eventually comes to be engaged with the projecting section of said stopper 10. A shaft 14 is fitted near the front ends of said reinforcement ribs 2, 2 of the support plate 1 so that the clip device may be fitted to a belt of a movable unit of a track conveyor system (not shown). A keep plate 16 having rectangularly bent longitudinal edges is bonded to a flat area of the press plate 7 by welding or the like.

The press plate 7 of a clip device having a configuration as described above can be swung open or closed around the shaft 8 to pinch and hold a part of an article of dress between the cushions 4, 6 thereof. As the part is pinched tighter by the clip device, the stopper 10 of the press plate 7 and the plate spring 12 of the support plate 1 abut each other and, if the press plate 7 is pressed further against the resilient force of the plate spring 12, the axially projecting stopper 10 and the outwardly projecting front end of the plate 12 switch their positions mutually so that the projections are engaged with each other to lock the press plate 7 relative to the support plate 1. The cushions 4, 6 absorb any excessive force that can be applied to and consequently damage the part of an article of dress pinched by them when the press plate 7 is pressed too hard against the support plate 1.

To remove the part of an article of dress from the clip device, the rear side, or the side where the stopper 10 is disposed, of the press plate 7 simply needs to be pressed hard to release the engagement of the stopper 10 and the plate spring 12 so that the plate 7 may be freely rotated around the shaft 8 relative to the support plate 1.

As apparent from the above description, since a clip device according to the invention does not rely on the resilient force of a spring but utilizes a stopper and a plate spring to hold the press plate of the clip to the support plate so that a part of an article of dress can be stably pinched between and held by the two plates regardless of the weight and the thickness of the part and/or any vibration to which the device may be subjected to.

Since the support plate and the press plate are provided with respective cushions, any excessive force that may be applied to the part is absorbed and dissipated by those cushions to protect the part against damage.

## Claims

1. A clip device for holding a part of an article of dress comprising an elongate support plate (1) provided with ribs (2) formed by bending opposite longitudinal edge regions thereof to extend transverse to the plane of the support plate (10), an elongate press plate (7) provided with ribs (5) formed by bending opposite longitudinal edge regions thereof to extend transverse to the plane of said press plate (7), a transverse shaft (8) extending through said ribs (2, 5) of said support and press plates (1, 7) to pivotally mount the press plate (7) to the support plate (1), and characterized by a cushion (4) made of sponge or a similar material bonded to a flat area of the support plate (1) near a front end thereof, an opening (3) in the support plate (1) near the rear end thereof, the press plate (7) having a width smaller than that of the opening (3) of the support plate (1) and extending therethrough, a cushion (6) bonded to a flat area of the press plate (7) presented in use to the cushion (4) of the support plate (1), said opening (3) being dimensioned to permit said press plate (7) to pivot about the axis of said shaft (8) to move the cushion (6) of the press plate (7) towards and away from the cushion (4) of the support plate (1) and said press plate (7) being equipped with an abutment member (10) formed by bending a rear end region of the press plate (7) out of the plane thereof and said support plate (1) being equipped with a plate spring (12) disposed near the rear end thereof for engagement by said abutment (10) of the press plate (7).

2. A clip device for holding a part of an article of dress as claimed in Claim 1, characterized in that the front end of said plate spring (12) is bent to project toward the shaft (8) and engages the abutment (10) of the press plate (7) in order to lock the press plate (7) relative to the support plate (1) when the clip is closed.

## Patentansprüche

1. Klammer zum Halten eines Teiles eines Bekleidungsartikels, mit einer länglichen Trageplatte (1), die mit Rippen (2) versehen ist, die dadurch gebildet sind, daß man ihre gegenüberliegenden Längskantenbereiche so biegt, daß sie sich quer zur Ebene der Trageplatte (10) erstrecken, einer länglichen Andruckplatte (7), die mit Rippen (5) versehen ist, die dadurch gebildet sind, daß man ihre gegenüberliegenden Längskantenbereiche so biegt, daß sie sich quer zur Ebene der genannten Andruckplatte (7) erstrecken, einer Querachse (8), die sich durch die genannten Rippen (2, 5) der Trage- und Andruckplatte (1, 7) erstrecken, um die Andruckplatte (7) schwenkbar an der Trageplatte (1) anzubringen, und gekennzeichnet durch ein Kissen (4), das aus einem Schwamm oder einem ähnlichen Material hergestellt ist, der auf einem flachen Bereich der Trageplatte (1) nahe ihres vorderen Endes aufgeklebt ist, eine Öffnung (3) in der Trageplatte (1) nahe ihrem hinteren Ende, wobei die Andruckplatte (7) eine Breite aufweist, die kleiner ist als die der Öffnung (3) der Trageplatte (1) und sich hierdurch erstreckt, und ein Kissen (6), das mit einem flachen Bereich der Andruckplatte (7) verbunden ist, das in Gebrauch dem Kissen (4) der Trageplatte (1) dargeboten wird, wobei die Öffnung (3) so bemessen ist, daß sie es der Andruckplatte (7) gestattet, um die geometrische Achse der Achse (8) zu schwenken, um das Kissen (6) der Andruckplatte (7) zum Kissen (4) der Trageplatte (1) hin und von diesem weg zu bewegen, und wobei die Andruckplatte (7) mit einem Anschlagteil (10) ausgestattet ist, das dadurch gebildet ist, daß man einen hinteren Endbereich der Andruckplatte (7) aus ihrer Ebene herausbiegt, und wobei die Trageplatte (1) mit einer Blattfeder (12) ausgestattet ist, die nahe ihrem hinteren Ende angeordnet ist, um in Eingriff mit dem Anschlag (10) der Andruckplatte (7) zu gelangen.

2. Klammer zum Halten eines Teils eines Bekleidungsartikels, wie beansprucht im Anspruch 1, dadurch gekennzeichnet, daß das vordere Ende der Blattfeder (12) zur Achse (8) hin gebogen ist und den Anschlag (10) der Andruckplatte (7) ergreift, um die Andruckplatte (7) relativ zur Trageplatte (1) zu verriegeln, wenn die Klammer geschlossen ist.

## Revendications

1. Dispositif à pince pour le maintien d'une partie d'un vêtement comprenant une plaque de support allongée (1), comportant des nervures (2), formées par pliage des régions de bordure longitudinales opposées correspondantes en vue d'une extension transversale au plan de la plaque de support (10), une plaque de serrage allongée (7) comportant des nervures (5), formées par pliage des régions de bordure longitudinales opposées correspondantes en vue d'une extension transversale au plan de ladite plaque de serrage (7), un arbre transversal (8), s'étendant à travers lesdites nervures (2, 5) desdites plaques de support et de serrage (1, 7) pour monter par pivotement la plaque de serrage (7) sur la plaque de support (1), et caractérisé par un coussin (4) composé de mousse ou d'un matériau similaire, fixé à une zone plate de la plaque de support (1), près d'une extrémité frontale correspondante, une ouverture (3) dans la plaque de support (1) près de l'extrémité arrière correspondante, la plaque de serrage (7) ayant une largeur inférieure à celle de l'ouverture (3) de la plaque de support (1) et s'étendant à travers celle-ci, un coussin (6) fixé à une zone plate de la plaque de serrage (7), présenté en service au coussin (4) de la plaque de support (1), ladite ouverture (3) étant dimensionnée de sorte à permettre le pivotement de ladite plaque de serrage (7) autour de l'axe dudit arbre (8) pour rapprocher et écarter le coussin (6) de la plaque de serrage (7) du coussin (4) de la plaque de support (1), ladite plaque de serrage (7) étant équipée d'un élément de butée (10) formée par pliage d'une région d'extrémité arrière de la plaque de serrage (7) en-dehors du plan correspondant, et ladite plaque de support (1) étant équipée d'un ressort à lames (12), agencé près de l'extrémité arrière correspondante en vue d'un engagement dans ledit élément de butée (10) de la plaque de serrage (7).

2. Dispositif à pince pour le maintien d'une partie d'un vêtement selon la revendication 1, caractérisé en ce que l'extrémité avant dudit ressort à lames (12) est pliée pour déborder en direction de l'arbre (8) et s'engage dans l'élément de butée (10) de la plaque de serrage (7) pour bloquer la plaque de serrage (7) par rapport à la plaque de support (1) lorsque la pince est fermée.
